# EUROPÄISCHE PATENTSCHRIFT

(11) **EP 3 502 372 B1**
(45) Veröffentlichungstag und Bekanntmachung des Hinweises auf die Patenterteilung: **28.10.2020**
(21) Anmeldenummer: 18212507.0
(22) Anmeldetag: 13.01.2011
(51) Int. Cl.: E04F 15/02, B32B 9/04, B32B 13/12

(54) **BODENBELAG MIT INTEGRALEN STEINPLATTEN SOWIE VERFAHREN ZU DESSEN HERSTELLUNG**
FLOOR LINING WITH INTEGRATED STONE PLATES AND METHOD FOR ITS MANUFACTURE
REVÊTEMENT DE SOL À DALLES EN PIERRE INCORPORÉES AINSI QUE SON PROCÉDÉ DE FABRICATION

(30) Priorität: 15.01.2010 DE 102010005068
(43) Veröffentlichungstag der Anmeldung: 26.06.2019
(62) Teilanmeldung aus: 11000238.3
(73) Patentinhaber: Scholz, Karl-Heinz Peter, 63768 Hösbach (DE)
(72) Erfinder: Scholz, Karl-Heinz Peter, 63768 Hösbach (DE)
(74) Vertreter: Michalski Hüttermann & Partner Patentanwälte mbB

(56) Entgegenhaltungen:
- EP-A1- 0 510 486
- EP-A2- 1 106 587
- DE-A1- 3 940 102
- DE-A1-102005 033 325
- DE-U1-202006 013 010

## Beschreibung

Die Erfindung betrifft einen Bodenbelag nach dem Oberbegriff des Anspruches 1 sowie ein Verfahren zu dessen Herstellung.

Es ist eine Vielzahl von Bodenbelägen bekannt, die aus schmelzbaren Ausgangmaterialien bestehen. Diese Ausgangsmaterialien liegen als Granulat, sogenannten Flakes oder auch als Pulver vor. Teilweise werden diesen Materialien andersfarbige Partikel beigemischt, damit ein Muster an der Oberfläche des Bodenbelages entsteht. Teilweise werden auch die Oberflächen der Bodenbeläge mit einer Prägeoberfläche versehen, damit ein gewünschtes Design möglich wird.

Die Herstellung von Bodenbelägen oder ähnlichen Bahnen und die Maschinen hierzu sind beispielsweise aus den Schriften DE 197 51 516 C2 und OE 10 2007 063 261 A1 bekannt. Bei dem Herstellungsprozess werden die thermoplastisch verformbaren Ausgangsmaterialien gleichmäßig auf ein unteres, umlaufendes Band gestreut. 1m weiteren Produktionsablauf drückt schließlich auch ein oberes, umlaufendes Band auf das Ausgangsmaterial. In dem Spalt zwischen den beiden Bändern werden die Ausgangsmaterialien mittels einer Heizung angewärmt oder angeschmolzen und miteinander verpresst. Das Pressen erfolgt über paarweise beidseits der Bänder angeordneten Pressplatten oder aus Presswalzen. Zum Schluss erfolgt eine Kühlung der so entstandenen Bahn, die dann entweder plattenförmig abgelängt oder aufgerollt wird.

Vielfach sind auf dem Markt auch Bodenbeläge gewünscht, die aus Steinplatten bestehen. Bei diesen Steinplatten handelt es sich um Fliesen (keramische Platten) und/oder Natursteine. Diese werden dann in einem Mörtelbett verlegt. Diese Verlegung hat jedoch den Nachteil, dass sie sehr zeit- und kostenaufwendig ist. Weiterhin besteht der Nachteil, dass derartige Steinböden als fußkalt empfunden werden. Auch wenn diese Steinböden wieder entfernt werden sollen entsteht ein erheblicher Aufwand an Kosten und Schmutz.

Es ist deshalb Aufgabe der Erfindung einen Bodenbelag zu finden, der das Design von Steinplatten ermöglicht, ohne dass die oben genannten Nachteile auftreten. Diese Aufgabe wird durch einen Bodenbelag mit den Merkmalen des Anspruches 1 gelöst. Vorteilhafte Ausführungsvarianten der Erfindung werden mit den abhängigen Ansprüchen 2 bis 12 aufgezeigt.

Ein Verfahren mit den Merkmalen des Anspruches 13 ist erfindungsgemäß zur Herstellung von solchen Bodenbelägen vorgesehen. Die abhängigen Ansprüchen 14 bis 16 offenbaren Gestaltungsvarianten des Verfahrens.

Das Wesen der Erfindung ist zum einen, dass Abschnitte der Oberfläche eines solchen Bodenbelages aus Steinplatten bestehen, und zum anderen, dass die Steinplatten integral mit dem thermoplastischen Material des Bodenbelages sind. Die Abschnitte des Bodenbelages sind jeweils zueinander mit Abstand oder jeweils aneinander anliegend angeordnet. Gemäß der Erfindung können weiterhin zusammen mit dem thermoplastischen Material auch die Steinplatten in eine betreffende Maschine zur Herstellung von thermoplastischen Bodenbelägen eingebracht werden. Durch die Erhitzung und dem Pressen der thermoplastischen Schicht und den Steinplatten wird nicht nur das thermoplastische Material angeschmolzen, sondern das thermoplastische Material benetzt auch die Unterseite der Steinplatten, wodurch beide fest miteinander verbunden werden.

Unter Steinplatten sind im Rahmen der Erfindung sowohl keramische Platten (also gebrannte Platten, Steinzeug) oder aus Steinmehl hergestellte Platten oder Steinmehl bzw. Steingranulat enthaltende Platten, als auch kalibrierte Natursteinplatten zu verstehen. Unter kalibrierten Natursteinen sind Natursteine zu verstehen, die vorher auf eine definierte Dicke gebracht wurden. Als Beispiel für Naturstein - jedoch nicht einschränkend - werden hier Marmor, Sandstein, Granit oder Basalt genannt.

Bei dem Herstellungsprozess wird auf ein umlaufendes unteres Pressband der Herstellungsmaschine das thermoplastische Granulat aufgebracht und darauf werden die Steinplatten gelegt.

Das Auflegen der Steinplatten kann beispielsweise durch ein Handlingsystem erfolgen. Damit das Granulat und die Steinplatten gepresst werden können, ist im weiteren Herstellungsverlauf auch ein umlaufendes oberes Pressband vorhanden. Beide Pressbänder werden von paarweise angeordneten Pressplatten und/oder Presswalzen - die auf der dem zu pressenden Material abgewandten Seite der Pressbänder angeordnet sind - gedrückt. Damit beim Pressen weder das den Steinplatten zugewandte Band, noch die Oberfläche der Steinplatten beschädigt werden, lässt man zwischen dem entsprechenden Pressband und der Oberfläche der Steinplatten ein dickenelastisches Band, eine Hilfsbahn mit hindurch laufen. Der oben beschriebene Herstellungsprozess hat außerdem den Vorteil, dass dickere Steinplatten tiefer in den welchen Untergrund des thermoplastischen Materials gepresst werden, sodass die Summe aus beiden Schichten immer konstant bleibt. Der erfindungsgemäße Bodenbelag ist dann sozusagen in seiner Dicke kalibriert.

Nach einer weiteren Variante des erfindungsgemäßen Herstellungsverfahrens ist vorgesehen, dass der Druck auf die Pressplatten derart ist, dass auch in die Fugen zwischen den Steinplatten das thermoplastische Material hinein gepresst wird, wobei der Druck auf die Pressplatten derart gesteuert wird, dass das thermoplastische Material nicht über die Oberkanten der Steinplatten hinausgepresst wird.

Im Rahmen der Erfindung besteht der Untergrund unter den Steinplatten nicht nur aus einer Schicht und besteht nicht nur aus reinem thermoplastischem Material.

Vorteilhafterweise können die Schichten auch aus Kunststoffen und Naturstoffen - wie Sisalfasern, Kokosfasern oder Kork - bestehen. Die Kunststoffe können hierbei auch mit üblichen Zuschlagstoffen wie Gesteinsmehlen oder den erwähnten Naturstoffen bzw. -fasern gefüllt sein. Erfindungsgemäß ist zusätzlich zum thermoplastischen Material unter den Steinplatten mindestens eine weitere Schicht angeordnet, wobei die weitere Schicht im Wesentlichen aus elastischen Kunststoffen und/oder Naturstoffen besteht.

Weiterhin ist es vorteilhaft, wenn der Bodenbelag - beispielsweise mittels Ruß oder Karbonfasern - elektrisch leitfähig ausgebildet ist. Eine elektrostatische Ableitung kann dann über eine der unteren elastischen Schichten oder über die Fugen erfolgen. Gemäß der Erfindung kann man auch die Unterseite des erfindungsgemäßen Bodenbelages selbsthaftend oder auch magnetisch ausbilden. Die Selbsthaftung kann über entsprechende Kleber oder auch Saugnäpfe realisiert werden, während man die magnetische Eigenschaft des Bodenbelages über Barium- oder Strontiumferrit-Einlagerungen mit anschließender Magnetisierung und einem eisenhaltigen Untergrund realisieren kann. Weitere Ausgestaltungen der Erfindung werden nun beispielhaft anhand der Figuren näher erläutert. Es zeigen in schematischer Darstellung:
Figur 1 einen Ausschnitt aus einer Ausgestaltung eines erfindungsgemäßen Bodenbelages, bei dem die Flanken der Steinplatten mit einem Überstand versehen sind;
Figur 2 einen Ausschnitt eines Bodenbelages, bei dem die Flanken der Steinplatten mit keinem Überstand versehen sind;
Figur 3 einen Ausschnitt eines Bodenbelages, bei dem die Flanken der Steinplatten nur teilweise mit einem Überstand versehen sind;
Figur 4 einen Ausschnitt eines Bodenbelages, bei dem die Flanken der Steinplatten nicht parallel sind;
Figur 5 einen Ausschnitt eines Bodenbelages, bei dem die Flanken der Steinplatten nicht parallel sind (andere Form, als bei Figur 4);
Figur 6 einen Ausschnitt des Bodenbelages, bei dem die Flanken der Steinplatten nachträglich mit einem Überstand versehen wurden;
Figur 7 einen Ausschnitt des Bodenbelages, bei dem die Flanken der Steinplatten nachträglich mit einem Überstand versehen wurden und dieser Überstand profiliert ist;
Figur 8 einen Ausschnitt eines Bodenbelages, bei dem die Flanken der Steinplatten nur teilweise mit einem Überstand versehen sind und die Fuge konvex verfugt ist.

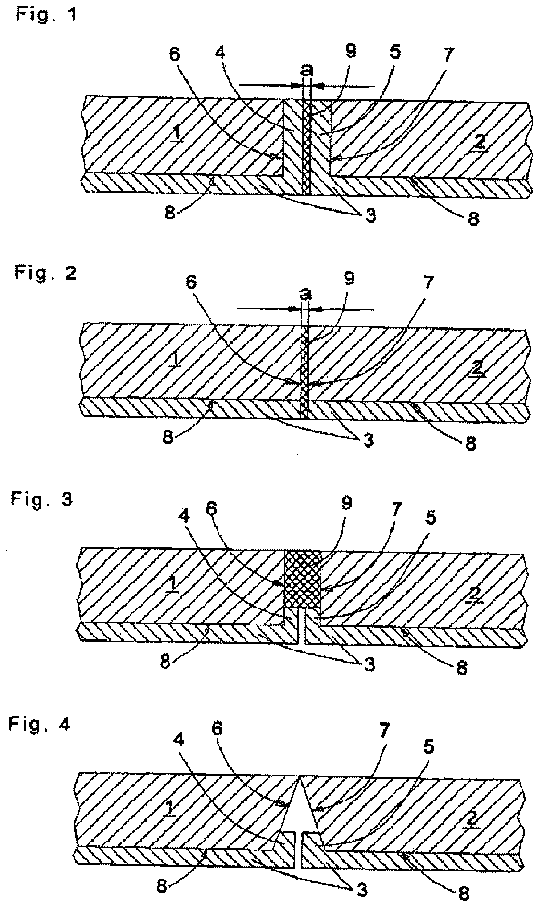

In der Figur 1 wird ein vertikaler Schnitt durch den erfindungsgemäßen Bodenbelag gezeigt. Steinplatten 1, 2 liegen mit ihrer Unterseite 8 auf einem thermoplastischen Material 3 auf. An Flanken 6, 7 der Steinplatten 1, 2 befindet sich ebenfalls thermoplastisches/elastisches Material 3, welches sich bei der Herstellung des Bodenbelages, bei dem Pressen hier hochgeschoben hat, wodurch die Überstände 4, 5 entstehen.

Da der Bodenbelag nach seiner Fertigung auch in kleinere Platten zerlegt werden kann, entstehen beim Verlegen des Bodenbelages auf dem Fußboden gegebenenfalls Fugen 9. Diese Fugen können aber auch aus ästhetischen Gründen mit Absicht gewählt werden. Die Fugenbreite kann hier zwischen 0 bis 4 mm betragen. Das Fugenmaterial kann dann entweder ebenfalls aus einem thermoplastischen Material oder aus einer selbstaushärtenden Fugendichtmasse oder aus einem mineralischen Material bestehen.

Um den Bodenbelag besser handhaben zu können - zum Beispiel beim Verlegen in Ecken, an Kanten oder Vorsprüngen des Bodens oder beim Legen von Mustern und Bildern -, muss er nach seiner Fertigung in kleinere Einheiten vereinzelt werden. Diese Einheiten können bis zur kleinsten Größe - der einer einzelnen Steinplatte - gefertigt werden. Bei kleinformatigen Steinplatten besteht die Möglichkeit, mehrere davon zusammenhängend auf eine elastische Unterlage als Verlegehilfe zu fixieren. Zum Zerteilen des Bodenbelages finden vorzugsweise oszillierende Messer Anwendung, die mittels Hochfrequenzschwingern angetrieben werden, Aber auch umlaufende Sägebänder oder Sägedrähte sind denkbar.

Die Figur 2 unterscheidet sich zur Figur 1 darin, dass hier keine Überstände 4, 5 vorhanden sind.

Da Steinplatten 1, 2 im Allgemeinen keine exakten Flanken 6, 7 aufweisen, sollten die Steinplatten 1, 2 verfugt werden. Die Fugenbreite ist hier kleiner als 4 mm anzunehmen.

In der Figur 3 reichen die oberen Enden der Überstände 4, 5 nicht bis zur Oberkante der Steinplatten 1, 2. Dieses kann mit Absicht so gefertigt worden sein, um evtl. eine dekorative Fuge 9 anbringen zu können, oder aber auch aus dem Grunde, da das verwendete thermoplastische Material nicht ausreichend fließfähig sein könnte. Das obere Ende der Überstände würde dann in einem separatem Arbeitsgang abgeschnitten werden.

Mit der Figur 4 wird eine andere Methode des Verlegens des Bodenbelages veranschaulicht. Hier sind die Flanken 6, 7 der Steinplatten 1, 2 in der Weise geneigt, dass die oberen Kanten der Steinplatten aneinander stoßen. Hier kann dann eine Fuge 9 entfallen. Im Rahmen dieser Ausgestaltung können die oberen Spitzen der Steinplatten 1, 2 in ihrem oberen Bereich auch parallel ausgestaltet sein.

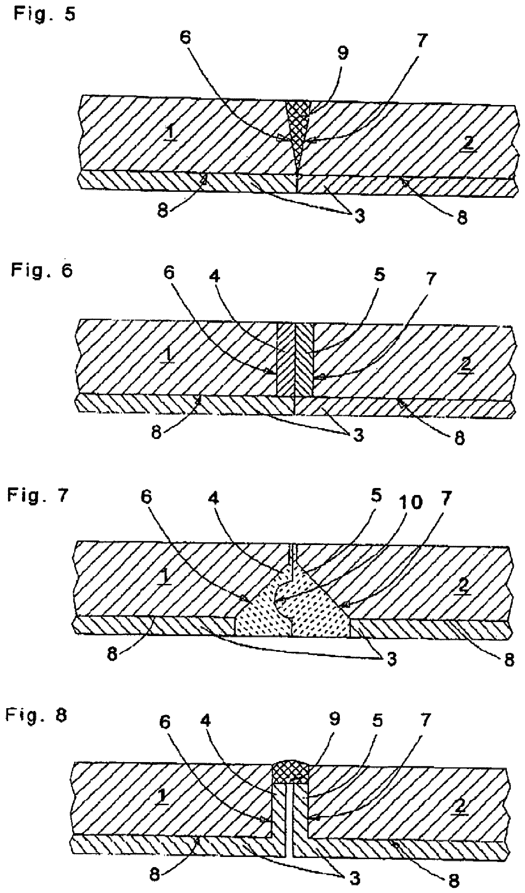

Im Gegensatz zur Figur 4, erfolgt in der Figur 5 die Neigung der Flanken in die andere Richtung. Auch gibt es hier keine Überstände 4, 5. Dadurch ist eine Fuge 9 erforderlich.

Im Gegensatz zur Figur 1, sind in der Figur 6 die Überstände 4, 5 in einem separaten Arbeitsgang, also nach dem Verbinden des thermoplastischen Materials 3 mit der Unterseite 8 der Steinplatten 1, 2, hergestellt worden. Die hier gezeigten Überstände 4, 5 können im Rahmen der Erfindung aber ebenfalls aus thermoplastischen, aber auch aus einem anderen Material bestehen. Ist eine entsprechende Fertigungsgenauigkeit vorhanden, so können dann die Steinplatten 1, 2 - falls gewollt - auch fugenlos verlegt werden.

Mit dem Ausführungsbeispiel nach der Figur 7 soll gezeigt werden, wie nachträglich angebrachte Überstände 4, 5 derart gestaltet werden können, dass sie dem maßgenauen Verlegen dienen. Durch eine Profilierung 10 in den Steinplatten 1, 2 mit einer Positiv- bzw. Negativform werden die aneinander stoßenden Steinplatten 1, 2 zentriert und fixiert. Diese Profilierung 10 ist in der Figur 7 als Halbkreis dargestellt. Die Profilierung 10 kann im Rahmen der vorliegenden Erfindung aber auch zickzackförmig oder auch als Nut-und-Feder-Verband ausgestaltet sein.

Die Figur 8 ist der Figur 3 ähnlich. Jedoch ist hier die Fuge 9 nicht so tief gehend. Ferner ist die Fuge 9 mit einer konvexen Wölbung versehen. Aus gestalterischen Gründen kann die Fuge 9 aber auch mit einer konkaven Wölbung versehen werden.

Diese Offenbarung bietet veranschaulichende erfindungsgemäße Ausführungsformen als Beispiel und nicht als Einschränkungen.

### Bezugszeichenliste

1 Steinplatte
2 Steinplatte
3 thermoplastisches Material
4 Überstand
5 Überstand
6 Flanke
7 Flanke
8 Unterseite
9 Fuge
10 Profilierung
a Abstand

## Patentansprüche

1. Bodenbelag bestehend aus mindestens einer Schicht aus einem thermoplastischen Material (3), **dadurch gekennzeichnet, dass** auf der Oberfläche des Bodenbelages Steinplatten (1, 2) angeordnet sind, wobei das thermoplastische Material (3) die Unterseite (8) der Steinplatten (1, 2) benetzt und beide miteinander eine feste Verbindung eingehen und dass zusätzlich zum thermoplastischen Material unter den Steinplatten (1, 2) mindestens eine weitere Schicht angeordnet ist, wobei die weitere Schicht im Wesentlichen aus elastischen Kunststoffen und/oder Naturstoffen besteht.

2. Bodenbelag nach Anspruch 1, **dadurch gekennzeichnet, dass** mehrere Steinplatten (1, 2) auf einem zugeschnittenen Abschnitt des Bodenbelages angeordnet sind.

3. Bodenbelag nach Anspruch 1 oder 2, **dadurch gekennzeichnet, dass** auch die Flanken (6, 7) der Steinplatten (1, 2) - zumindest teilweise - mit dem thermoplastischen Material (3) benetzt sind und dadurch einen so genannten Überstand (4, 5) bilden.

4. Bodenbelag nach Anspruch 1 oder 2, **dadurch gekennzeichnet, dass** auch die Flanken (6, 7) der Steinplatten (1, 2) - zumindest teilweise - mit einem thermoplastischen Material (3) benetzt sind und dadurch einen so genannten Überstand (4, 5) bilden, wobei sich dieses Material von der Zusammensetzung her von dem thermoplastischen Material (3) unterhalb der Steinplatten (1, 2) unterscheidet.

5. Bodenbelag nach mindestens einem der Ansprüche 3 bis 4, **dadurch gekennzeichnet, dass** der Überstand (4, 5) In einem separaten Arbeitsgang, also nach dem Verbinden des thermoplastischen Materials (3) mit den Steinplatten (1, 2), an den Flanken (6, 7) der Steinplatten (1, 2) angebracht wird.

6. Bodenbelag nach mindestens einem der Ansprüche 3 bis 5, **dadurch gekennzeichnet, dass** der Überstand (4, 5) mit einer Profilierung (10) versehen, die derart gestaltet ist, dass sie in die Profilierung des Überstandes (4, 5) einer benachbarten Steinplatte (1, 2) im Wesentlichen spaltfrei eingreifen kann.

7. Bodenbelag nach Anspruch 6, **dadurch gekennzeichnet, dass** die Profilierung (10) halbkreisförmig oder zickzackförmig oder als Nut-Feder-Profilierung ausgestaltet ist.

8. Bodenbelag nach mindestens einem der Ansprüche 1 bis 7, **dadurch gekennzeichnet, dass** das thermoplastische Material (3) und/oder die weitere Schicht elektrisch leitfähig ausgebildet ist.

9. Bodenbelag nach mindestens einem der Ansprüche 1 bis 8, **dadurch gekennzeichnet, dass** eine elektrostatische Ableitung über die Fugen zwischen den Steinplatten (1, 2) erfolgt.

10. Bodenbelag nach mindestens einem der Ansprüche 1 bis 9, **dadurch gekennzeichnet, dass** das thermoplastische Material (3) und/oder die weitere Schicht selbsthaftend ausgebildet ist.

11. Bodenbelag nach mindestens einem der Ansprüche 1 bis 10, **dadurch gekennzeichnet, dass** das thermoplastische Material (3) und/oder die weitere Schicht magnetisch ausgebildet ist.

12. Verfahren zur Herstellung eines Bodenbelages nach einem der Ansprüche 1 bis 11, bei dem in einer Doppelbandpresse - auf ein umlaufendes unteres Band zunächst ein Bestandteil des Bodenbelages, vorzugsweise die thermoplastisch verformbaren Ausgangsmaterialien, insbesondere thermoplastisches Granulat, und darauf ein weiterer Bestandteil des Bodenbelages, die Steinplatten, gleichmäßig aufgelegt werden,
- Im weiteren Herstellungsablauf ein umlaufendes oberes Band auf das Ausgangsmaterial drückt,
- In dem Förderspalt zwischen den beiden Bändern der Doppelbandpresse die Ausgangsmaterialien mittels einer Heizung angewärmt oder angeschmolzen und miteinander verpresst werden, - wobei das Pressen über paarweise auf der dem zu pressenden Material abgewandten Seite der Bänder angeordneten Pressplatten und/oder Presswalzen erfolgt,
- so dass jede Steinplatte, jeweils als Abschnitt der Oberfläche des Bodenbelages, integral mit der Tragschicht des Bodenbelages, dem thermoplastischen Material ist, und zumindest die Unterseite jeder Steinplatte vom thermoplastischen Material benetzt ist,
- und anschließend eine Kühlung des so entstandenen Bodenbelages erfolgt, der dann entweder plattenförmig oder bahnförmig abgelängt wird.

13. Verfahren nach Anspruch 12, **dadurch gekennzeichnet, dass** auf das umlaufende untere Band zunächst die Steinplatten und dann die thermoplastisch verformbaren Ausgangsmaterialien aufgelegt werden.

14. Verfahren nach Anspruch 12 oder 13, **dadurch gekennzeichnet, dass** vor Eintritt der auf das untere Band aufgelegten Ausgangsmaterialien in den Förderspalt zwischen der Oberfläche der Steinplatten und dem entsprechenden Band ein dickenelastisches Hilfsband angeordnet wird, welches durch den Förderspalt mit hindurch läuft.

15. Verfahren nach Anspruch 12, **dadurch gekennzeichnet, dass** der Druck auf die Pressplatten derart erhöht wird, dass auch in die Fugen (9) zwischen den Steinplatten das thermoplastische Material (3) hineingepresst wird.

## Claims

1. Floor covering consisting of at least one layer of a thermoplastic material (3), **characterized in that** stone slabs (1, 2) are arranged on the surface of the floor covering, wherein the thermoplastic material (3) wets the bottom side (8) of the stone slabs (1, 2) and both form together a permanent bond, and **in that** in addition to the thermoplastic material below the stone slabs (1, 2) at least one further layer is arranged, wherein the further layer consists essentially of elastic plastics and/or natural materials.

2. Floor covering according to claim 1, **characterized in that** a plurality of stone slabs (1, 2) are arranged on a tailored portion of the floor covering.

3. Floor covering according to claim 1 or 2, **characterized in that** also the flanks (6, 7) of the stone slabs (1, 2) are wetted - at least partially - with the thermoplastic material (3) and thereby form a so-called protrusion (4, 5).

4. Floor covering according to claim 1 or 2, **characterized in that** the flanks (6, 7) of the stone slabs (1, 2), too, are wetted - at least partially - with a thermoplastic material (3) and thereby form a so-called protrusion (4, 5), wherein this material differs from the thermoplastic material (3) below the stone slabs (1, 2) with respect to the composition.

5. Floor covering according to at least one of claims 3 to 4, **characterized in that** the protrusion (4, 5) is attached in a separate work process, i.e. after connecting the thermoplastic material (3) to the stone slabs (1, 2), at the flanks (6, 7) of the stone slabs (1, 2).

6. Floor covering according to at least one of claims 3 to 5, **characterized in that** the protrusion (4, 5) is provided with a profile (10) which is designed such that it can engage essentially jointless into the profile of the protrusion (4, 5) of an adjacent stone slab (1, 2).

7. Floor covering according to claim 6, **characterized in that** the profile (10) is semicircular or zigzag-shaped or designed as a tongue and groove profile.

8. Floor covering according to at least one of claims 1 to 7, **characterized in that** the thermoplastic material (3) and/or the further layer is designed electrically conductive.

9. Floor covering according to at least one of claims 1 to 8, **characterized in that** an electrostatic discharge takes place via the joints between the stone slabs (1, 2).

10. Floor covering according to at least one of claims 1 to 9, **characterized in that** the thermoplastic material (3) and/or the further layer is formed self-adhesive.

11. Floor covering according to at least one of claims 1 to 10, **characterized in that** the thermoplastic material (3) and/or the further layer is formed magnetically.

12. Method for producing a floor covering according to any one of claims 1 to 11, wherein
in a double belt press on a circumferential lower belt at first one component of the floor covering, preferably the thermoplastically deformable raw materials, in particular thermoplastic granules, and thereon another component of the floor covering, the stone slabs, are placed uniformly,
in the further production process a circumferential upper belt presses onto the raw materials,
in the conveyor gap between the two belts of the double belt press the raw materials are warmed or melted by means of a heater and pressed with each other, wherein the pressing takes place via press plates and/or press rollers arranged in pairs on the side of the belts facing away from the material to be pressed,
such that each stone slab, respectively as a portion of the surface of the floor covering, is integral with the carrier layer of the floor covering, the thermoplastic material, and at least the bottom side of each stone slab is wetted by the thermoplastic material,
and then the resulting floor covering is cooled and subsequently cut to length either in the form of a plate or a web.

13. Method according to claim 12, **characterized in that** on the circumferential lower belt at first the stone slabs and then the thermoplastically deformable raw materials are placed.

14. Method according to claim 12 or 13, **characterized in that** prior to the entry of the raw materials placed on the lower belt into the conveyor gap between the surface of the stone slabs and the corresponding belt, a thickness elastic auxiliary belt is arranged, which simultaneously therewith passes through the conveyor gap.

15. Method according to claim 12, **characterized in that** the pressure applied onto the press plates is increased in such a way that the thermoplastic material (3) is also pressed into the joints (9) between the stone plates.

## Revendications

1. Revêtement de sol constitué d'au moins une couche à base d'un matériau thermoplastique (3), **caractérisé en ce que** des dalles de pierre (1, 2) sont disposées sur la surface du revêtement de sol, où le matériau thermoplastique (3) mouille la face inférieure (8) des dalles de pierre (1, 2) et les deux forment ensemble un assemblage solide, et qu'en outre, en plus du matériau thermoplastique, au moins une couche supplémentaire est disposée en dessous des dalles de pierre (1, 2), où la couche supplémentaire est constituée essentiellement de matières plastiques élastiques et/ou de matières naturelles.

2. Revêtement de sol selon la revendication 1, **caractérisé en ce que** plusieurs dalles de pierre (1, 2) sont disposées sur une portion prédécoupée du revêtement de sol.

3. Revêtement de sol selon la revendication 1 ou la revendication 2, **caractérisé en ce qu'**également les flancs (6, 7) des dalles de pierre (1, 2) sont mouillés au moins partiellement avec le matériau thermoplastique (3) et forment de ce fait une dite saillie (4, 5).

4. Revêtement de sol selon la revendication 1 ou la revendication 2, **caractérisé en ce qu'**également les flancs (6, 7) des dalles de pierre (1, 2) sont mouillés au moins partiellement avec un matériau thermoplastique (3) et forment de ce fait une dite saillie (4, 5), où ce matériau se distingue de part la composition du matériau thermoplastique (3) en dessous des dalles de pierre (1, 2).

5. Revêtement de sol selon au moins l'une des revendications 3 à 4, **caractérisé en ce que** la saillie (4, 5) est rapportée sur les flancs (6, 7) des dalles de pierre (1, 2) dans un stade de travail séparé, c'est-à-dire après l'assemblage du matériau thermoplastique (3) avec les dalles de pierre (1, 2).

6. Revêtement de sol selon au moins l'une des revendications 3 à 5, **caractérisé en ce que** la saillie (4, 5) est pourvue d'un profilage (10) qui est conçu de telle manière qu'elle peut se mettre en prise dans le profilage de la saillie (4, 5) d'une dalle de pierre (1, 2) voisine essentiellement sans fente.

7. Revêtement de sol selon la revendication 6, **caractérisé en ce que** le profilage (10) est conçu en forme de demi cercle, ou en forme de zigzag, ou sous forme d'un profilage de type rainure et languette.

8. Revêtement de sol selon au moins l'une des revendications 1 à 7, **caractérisé en ce que** le matériau thermoplastique (3), et/ou la couche supplémentaire, sont conçus électriquement conducteurs.

9. Revêtement de sol selon au moins l'une des revendications 1 à 8, **caractérisé en ce qu'**une dérivation électrostatique a lieu entre les dalles de pierre (1, 2) par le biais des jointures.

10. Revêtement de sol selon au moins l'une des revendications 1 à 9, **caractérisé en ce que** le matériau thermoplastique (3), et/ou la couche supplémentaire, sont conçus auto-adhésifs.

11. Revêtement de sol selon au moins l'une des revendications 1 à 10, **caractérisé en ce que** le matériau thermoplastique (3) et/ou la couche supplémentaire sont conçus magnétiques.

12. Procédé de fabrication d'un revêtement de sol selon l'une des revendications 1 à 11, chez lequel, dans une presse à double bande, d'abord un composant du revêtement de sol, de préférence, les matériaux de départ transformables de manière thermoplastique, notamment des granulés thermoplastiques, sont déposés sur une bande inférieure circonférentielle, et ensuite un autre composant du revêtement de sol, les dalles de pierre, est déposé dessus de manière régulière,
- dans la poursuite de la fabrication, une bande supérieure circonférentielle presse sur le matériau de départ,
- les matériaux de départ sont réchauffés ou subissent un début de fusion et sont pressés ensemble au moyen d'un chauffage dans le sillon de transport entre les deux bandes de la presse à double bande, où la compression a lieu par le biais de plaques de compression et/ou de rouleaux de pressage disposés par paires sur le côté des bandes opposé au matériau à comprimer,
- de sorte que chaque dalle de pierre fait partie intégrante avec la couche support du revêtement de sol avec le matériau thermoplastique respectivement sous forme d'une portion de la surface du revêtement de sol, et au moins la face inférieure de chaque dalle de pierre est mouillée par le matériau thermoplastique,
- et ensuite, un refroidissement du revêtement de sol ainsi obtenu a lieu, qui est alors débité soit en forme de dalles soit en forme de bande.

13. Procédé selon la revendication 12, **caractérisé en ce que** tout d'abord les dalles de pierre et ensuite les matériaux de départ transformables de manière thermoplastique sont déposés sur la bande inférieure circonférentielle.

14. Procédé selon la revendication 12 ou la revendication 13, **caractérisée en ce que**, avant l'entrée des matériaux de départ déposés sur la bande inférieure dans le sillon de transport entre la surface des dalles de pierre et la bande correspondante, une bande auxiliaire élastique dans l'épaisseur est disposée, laquelle s'étend à travers le sillon de transport.

15. Procédé selon la revendication 12, **caractérisé en ce que** la pression est augmentée sur les plaques de compression de telle manière que le matériau thermoplastique (3) est également pressé à l'intérieur dans les jointures (9) entre les dalles de pierre.
